**Europäisches Patentamt**

**European Patent Office**

**Office européen des brevets**

(19)

(11) Veröffentlichungsnummer: **0 576 847 A2**

(12) ## EUROPÄISCHE PATENTANMELDUNG

(21) Anmeldenummer: **93108825.6**

(51) Int. Cl.5: **B60N 2/28**

(22) Anmeldetag: **02.06.93**

(30) Priorität: **02.06.92 DE 9207413 U**

(43) Veröffentlichungstag der Anmeldung:
**05.01.94 Patentblatt 94/01**

(84) Benannte Vertragsstaaten:
**BE CH DE FR GB IT LI LU NL PT SE**

(71) Anmelder: **Schräder, Margarete**
**Guttenbergstrasse 10**
**D-95352 Marktleugast(DE)**

(72) Erfinder: **Schräder, Margarete**
**Guttenbergstrasse 10**
**D-95352 Marktleugast(DE)**

(74) Vertreter: **Tergau, Enno, Dipl.-Ing.**
**Mögeldorfer Hauptstrasse 51**
**D-90482 Nürnberg (DE)**

(54) **Anpassung der Sitzhöhe eines Kindes an ein in einem Fahrzeug installiertes Sicherheitsgurtsystem.**

(57) Ein auf der Sitzfläche eines Kraftfahrzeugsitzes aufstellbares, für Kinder bestimmtes Sitzelement dient zur Anpassung der Sitzhöhe des Kindes an ein im Fahrzeug serienmäßig installiertes Sicherheitsgurtsystem. Zur Sicherung einer im wesentlichen aufrechten Sitzstellung des Kindes auf dem Sitzelement (1) weist dieses in seinem rückwärtigen Bereich (12) Mittel zum An- oder Aufsetzen einer Seitenteile (18,19) enthaltenden Rückenlehne (17) auf.

FIG.1

EP 0 576 847 A2

Die Erfindung betrifft ein auf der Sitzfläche eines Kraftfahrzeugsitzes aufstellbares Sitzelement für Kinder. Dadurch soll die Sitzhöhe des Kindes an ein im Fahrzeug insbesondere serienmäßig installiertes Sicherheitsgurtsystem anpaßbar sein. Zur besseren individuellen Anpaßbarkeit an bestimmte Körpergrößen des Kindes ist vorteilhaft die wirksame Höhe des Sitzelements verstellbar (EP-B-0 153 690).

Die durch das bekannte, in seiner Wirkhöhe verstellbare Sitzelement ermöglichte Anpassung der Sitzposition des Kindes an ein im Fahrzeug vorhandenes, meist vorgegeben montiertes Sicherheitsgurtsystem ist nicht nur von der Körpergröße des Kindes abhängig. Vielmehr setzt eine sinngerechte Anpassung voraus, daß das Kind mit aufrechtem Körper auf dem Sitzelement sitzt und damit eine gewünschte Sollposition einnimmt. Diese Voraussetzung ist aber insbesondere bei längeren Fahrten nicht gewährleistet. Erfahrungsgemäß wirken gerade längere Fahrten auf das Kind einschläfernd. Es nimmt dann nicht mehr eine aufrechte Sitzposition ein. Vielmehr neigt sich der Kindskörper unkontrolliert zur Seite. Damit wird die durch das Sitzelement ermöglichte Anpassung der Sitzposition an das Sicherheitsgurtsystem obsolet.

Zur Lösung dieses Problems ist aus der EP-A-0 155 784 bekannt, das Sitzelement durch eine schalenartig ausgebildete Rückenlehne zu ergänzen und diese Rückenlehne zweckmäßigerweise auf das Sitzelement aufzustecken. Zwar ist es vorteilhaft, die aus EP-A-0 155 784 bekannte Rückenlehne einfach auf das Sitzelement aufstecken und davon wieder abnehmen zu können. Nachteilhaft an dieser Verbindung ist jedoch ihre Labilität. Der Erfindung liegt deshalb die Aufgabe zugrunde, Sitzelement und Rückenlehne so aneinander anzupassen, daß sie im Montageendzustand eine möglichst integrale Sitzeinheit bilden.

Zur Lösung dieser Aufgabe ist vorgesehen, sowohl das Sitzelement als auch die Rückenlehne mit Seitenteilen zu versehen, so daß die Seitenteile des Sitzelements und die Seitenteile der Rückenlehne im Montageendzustand derart aneinander anliegen, daß sie einen flanschartigen formschlüssigen Sitz miteinander ausbilden. Durch diese flanschartige Aneinanderlage der Seitenteile von Rückenlehne und Sitzelement wird die aus dem genannten Stand der Technik bekannte Zweipunkt-Halterung zwischen Sitzelement und Rückenlehne durch zwei flächenförmige Halterungen ergänzt. Die zwischen Sitzfläche und Rückenlehne wirksamen Kräfte sind somit auf diese Halteflächen gleichmäßig verteilt. Außerdem ist der aus Sitzfläche und Rückenlehne gebildete Kinderfahrzeugsitz im Montageendzustand ein integrales Bauteil, welches auch bei der Montage und Demontage am bzw. vom Fahrzeugsitz robuste Eigenschaften besitzt.

Die Ansprüche 2 bis 4 betreffen zweckmäßige Maßnahmen zur weiteren Verbesserung der Verbindung zwischen Sitzfläche und Rückenlehne. Im Montageendzustand bilden die flanschartig aneinanderliegenden Seitenteile jeweils eine permanente Flächenführung mit großen Führungsflächen aneinander. Dieser formschlüssige Zweiflächensitz wird durch die Maßnahmen gemäß Anspuch 2 und Anspruch 3 noch durch eine zusätzliche kraftschlüssige Verbindung ergänzt und dauerhaft gesichert. Die Verwendung einer Schraubverbindung nach Anspruch 3 hat hierbei den Vorteil, daß die Rückenlehne weiterhin lösbar auf der Sitzfläche fixiert ist und jederzeit von der Sitzfläche demontierbar ist. Zudem ist die Anbringung derartiger Schraubverbindungen einfach und kostengünstig.

Die Anbringung der mechanischen Verbindung nahe der Oberkanten der Seitenteile des Sitzelements nach Anspruch 4 dient zur Bildung eines langen Hebelarms. Dieser wirksame Hebelarm erstreckt sich von der Unterkante der Rückenlehne bis zur mechanischen Verbindung. Durch diesen Hebelarm werden die Einsteckzapfen an der Unterkante der Rückenlehne zusätzlich entlastet und die Kräfteverteilung auf den Zweiflächensitz umgelenkt.

Die Ansprüche 5 und 6 betreffen Maßnahmen zur Optimierung der Gurtführung im Montageendzustand. Der Beckengurt des Fahrzeug-Sicherheitsgurtsystems läuft danach im angelegten Zustand in Führungsausnehmungen. Die in die Führungsausnehmungen vorspringenden Fortsätze dienen dazu, ein Herausgleiten der Beckengurte aus den Führungsausnehmungen zu verhindern. Auf diese Weise ist verhindert, daß das Kind im Unglücksfall unter dem Beckengurt durchtaucht und seinerseits aus dem Kinderfahrzeugsitz herausrutscht. Bei dieser Art der Beckengurtführung ist die volle Funktionsfähigkeit des erfindungsmäßigen Zweiflächensitzes zwischen den Seitenteilen der Sitzfläche und den Seitenteilen der Rückenlehne erhalten.

Anspruch 7 dient der Vereinfachung der Herstellung und einer erhöhten Stabilität von Sitzfläche und Rückenlehne. Gleiches trifft für Anspruch 8 zu.

Die Ansprüche 9 und 10 betreffen eine Weiterbildung dahingehend, daß konsequent eine aufrechte Körperposition des Kindes auf dem Sitzelement sichergestellt ist.

Mit der Erfindung ist es möglich, einen aus einer permanent mit dem Sitzelement verbundenen Rückenlehne bestehenden Kinderfahrzeugsitz zu herzustellen.

Die Erfindung wird anhand von in den Figuren daragestellten Ausführungsbeispielen näher erläutert. Es zeigen:

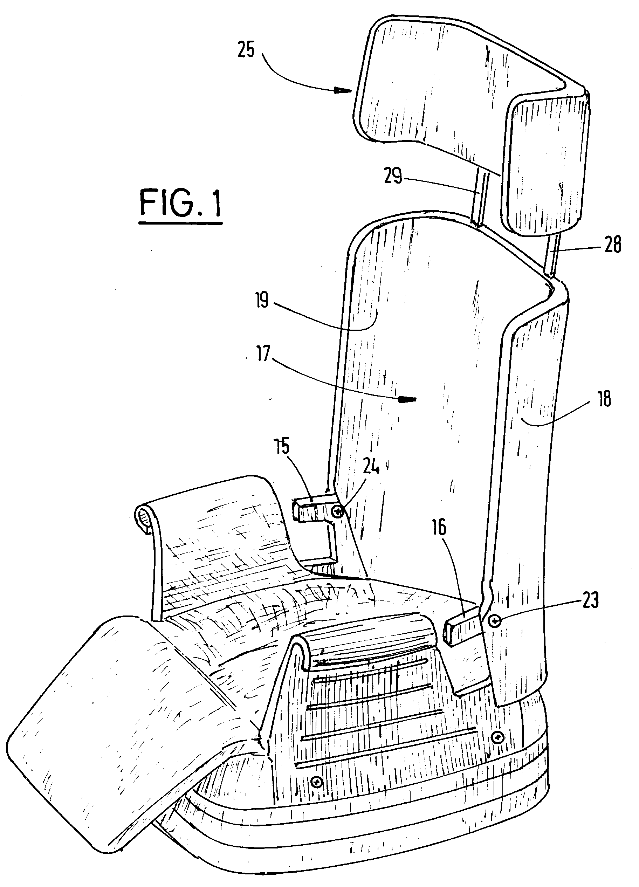

Fig. 1      in Seitenansicht ein Sitzelement mit aufgesetzter Rückenlehne, wobei diese beiden wesentlichen Teile zusätzlich eine Polsterung tragen,

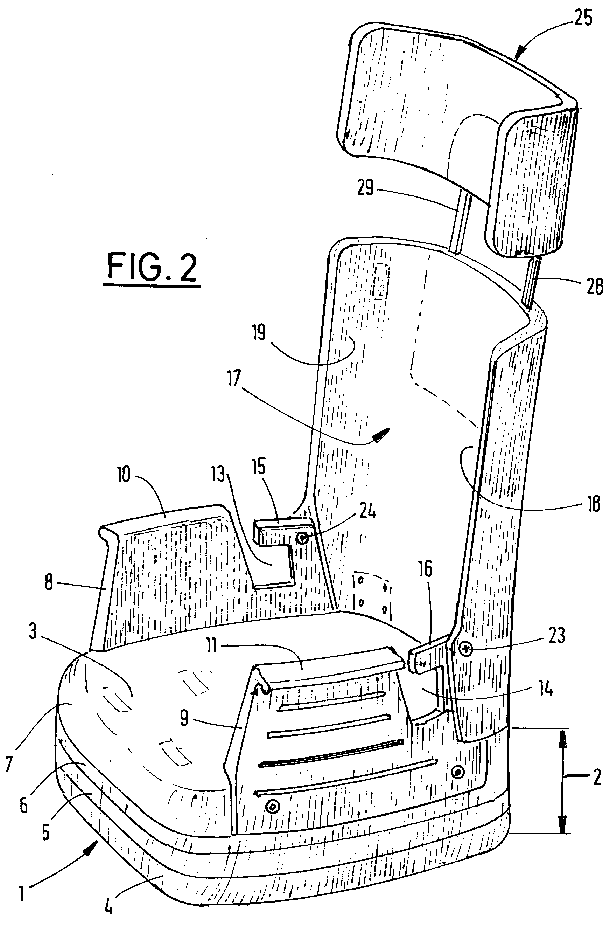

Fig. 2 eine Seitenansicht analog Fig. 1 ohne Polsterbezüge für das Sitzelement und die Rückenlehne,

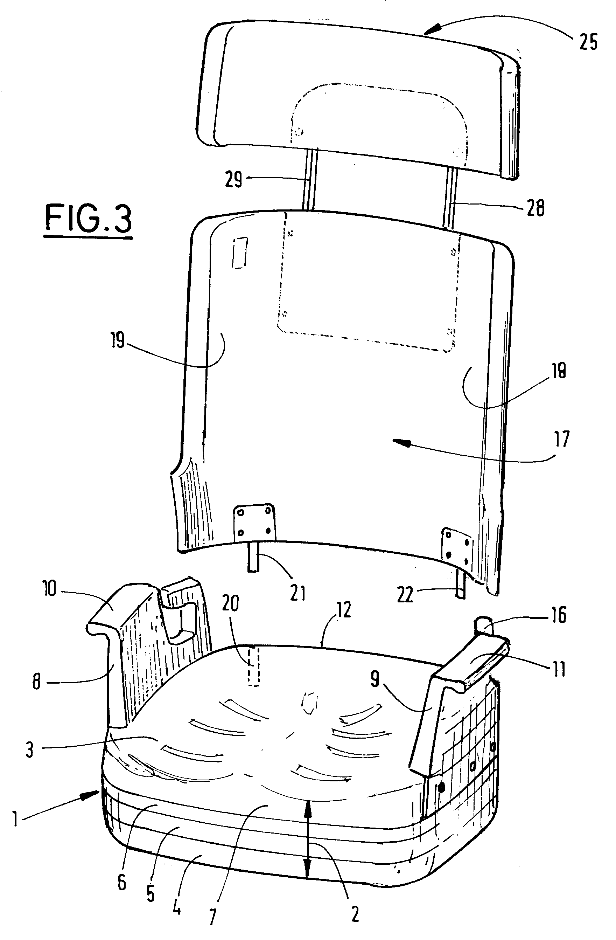

Fig. 3 die Rückenlehne in einer aus ihrer Steckverbindung mit dem Sitzelement herausgehobenen Position.

Das Sitzelement 1 ist auf der nicht dargestellten Sitzfläche eines Kraftfahrzeugsitzes aufstellbar. Die Sitzhöhe 2 seiner Sitzfläche 3 ist beispielsweise dadurch verstellbar, daß mehrere scheibenartig aufeinandersetzbare Basiselemente 4-6 in unterschiedlicher Zahl und Wirkhöhe unter dem die Sitzfläche 3 tragenden Sitzflächenelemet 7 wahlweise positionierbar sind.

Das Sitzelement 1 enthält an seinen beiden die Sitzfläche 3 flankierenden Seiten als Armstützen ausgebildete Seitenteile 8,9, die sich im wesentlichen über die Länge beider Seiten der Sitzfläche 3 erstrecken und mit ihrer Oberkante Armlehnen 10,11 bilden. Dazu sind die Armlehnen 10,11 in voneinander abgewandter Richtung von den Seitenteilen 8,9 nach auswärts gebogen.

An ihrem der Rückseite 12 des Sitzelements 1 zugewandten Ende sind die Seitenteile 8,9 mit von der die Armlehnen 10,11 tragenden Oberseite her ausgemuldeten Führungsausnehmungen 13,14 für einen Beckengurt oder das Beckenteil eines Dreipunktgurtes des am Fahrzeug installierten Sicherheitsgurtsystems versehen. Zwischen den Führungsausnehmungen 13,14 und der Rückseite 12 des Sitzelements 1 weisen beide Seitenteile 8,9 Fortsätze 15,16 auf, die sich nach oben bis nahezu zum Höhenniveau der Armlehnen 10,11 erstrecken.

In seinem rückwärtigen Bereich, nämlich benachbart zu seiner Rückseite 12 ist das Sitzelement 1 mit Mitteln zum An- bzw. Aufsetzen einer Rückenlehne 17 versehen. Die Rückenlehne 17 weist zur Sicherung einer im wesentlichen aufrechten Sitzstellung des Kindes beidseitig Seitenteile 18,19 auf. Die Rückenlehne 17 gewinnt dadurch die Gesamtgestalt einer ausgeprägten, nach oben gerichtet verlaufenden und zur Sitzseite des Kindes hin ausgemuldeten Rinne, die eine wirksame Führung für den aufrechten Sitz des Kindskörpers bietet.

Das Sitzelement 1 ist hinter seiner Sitzfläche 3 und benachbart zur Rückseite 12 mit in seinem Körper vertieft angeordneten, im wesentlichen vertikalen Hülsen 20 zum von oben erfolgenden Einstecken der Rückenlehne 17 mittels an dieser nach unten abstehend angebrachter Zapfen 21,22 versehen.

Oberhalb der Sitzfläche 3, nämlich im Bereich der Fortsätze 15,16 sind zusätzliche Fixiermittel zwischen Sitzelement 1 und Rückenlehne 17 vorgesehen. Diese Fixiermittel greifen an den Seitenteilen 18,19 der Rückenlehne 17 und an von den Seitenteilen 8,9 nach hinten vorstehenden Fortsätzen 15,16 an. Insbesondere sind die Seitenteile 8,9 des Sitzelements 1 und die Seitenteile 18,19 der Rückenlehne 17 in flanschartiger Aneinanderlage miteinander verschraubbar. Die Schraubverbindungen 23,24 durchsetzen dabei die Fortsätze 15,16 der Seitenteile 8,9 des Sitzelements und die Seitenteile 18,19 der Rückenlehne 17. Zur Bildung eines vorteilhaft langen Hebelarmes und zur Entlastung der Zapfen 21,22 sind die Schraubverbindungen 23,24 mit ausreichendem Abstand oberhalb der Sitzfläche 3 positioniert.

Die Rückenlehne 17 und die mit ihr verbundenen Seitenteile 18,19 sind aus einem Kunststoff einstückig geformt, gegebenenfalls geblasen. Auch die Steckzapfen 21,22 können einstückig an die Rückenlehne 17 angeformt sein.

An der Rückenlehne 17 ist weiterhin eine Kopfstütze 25 höhenverstellbar angebracht. Entsprechend der Form der Rückenlehne weist sie angesetzte Seitenteile 26,27 zur entsprechend den Ohren eines Ohrensessels wirksamen Kopfanlage auf. Dazu ragt die Kopfstütze 25 mit an ihrer Unterseite angebrachten Führungsstreben 28,29 in entsprechende Führungen hinein, die in die Rückenlehne 17 inkorporiert sind. Die Art der Höhenverstellbarkeit entspricht etwa der Höhenverstellbarkeit von an Kraftfahrzeugsitzen bekannten Kopfstützen. Daher ist hier eine nähere Erläuterung ihrer Funktionsweise entbehrlich.

## Bezugszeichenliste

1 Sitzelement

2 Sitzhöhe

3 Sitzfläche

4 Basiselement

5      "

6      "

7 Sitzflächenelement

8 Seitenteil

9      "

10 Armlehne

11      "

12 Rückseite

13 Führungsausnehmung

14      "

15 Fortsatz

16      "

17 Rückenlehne

18 Seitenteil

19      "

20 Hülse

21 Zapfen

22      "

23 Schraubverbindung

24      "

25 Kopfstütze

26 Seitenteil

27      "

28 Führungsstrebe

29      "

**Patentansprüche**

1. Auf der Sitzfläche eines Kraftfahrzeugsitzes aufstellbares Sitzelement (1) zur Anpassung der Sitzhöhe eines Kindes an ein im Fahrzeug insbesondere serienmäßig installiertes Sicherheitsgurtsystem mit im wesentlichen vertikal ausgerichteten Hülsen (20) hinter seiner Sitzfläche (3) zur Aufnahme von Zapfen (21,22) einer auf das Sitzelement (1) aufsteckbaren Rückenlehne (17),
   dadurch gekennzeichnet,
   daß bei aufgesteckter Rückenlehne (17) am Sitzelement (1) fixierte Seitenteile (8,9) und an der Rückenlehne (17) fixierte Seitenteile (18,19) flanschartig aneinanderliegen.

2. Sitzelement nach Anspruch 1,
   dadurch gekennzeichnet
   daß die Seitenteile (8,9) am Sitzelement (1) und die Seitenteile (18,19) an der Rückenlehne (17) mittels mechanischer Verbindungselemente miteinander lösbar verbunden sind.

3. Sitzelement nach Anspruch 2,
   gekennzeichnet durch
   Schraubverbindungen (23,24) als mechanische Verbindungselemente, welche die aneinanderliegenden Bereiche der Seitenteile (8,9) am Sitzelement (1) und der Seitenteile (18,19) an der Rückenlehne (17) durchsetzen.

4. Sitzelement nach Anspruch 2 oder 3,
   dadurch gekennzeichnet
   daß die mechanischen Verbindungselemente die Seitenteile (8,9) am Sitzelement (1) direkt unterhalb ihrer der Sitzfläche (3) abgewandten Oberkanten vorzugsweise horizontal durchsetzen zur Schaffung eines langen wirksamen Hebelarms.

5. Sitzelement nach einem oder mehreren der vorhergehenden Ansprüche,
   dadurch gekennzeichnet,
   daß die Seitenteile (8,9) der Sitzfläche (1) von Führungsausnehmungen (13,14) für das Fahrzeug-Sicherheitsgurtsystem zweigeteilt sind,
   - in einen von der Rückenlehne entfernten Bereich mit Armlehnen (10,11) auf der Oberseite der Seitenteile (8,9) und
   - in einen an den Seitenteilen (18,19) der Rückenlehne (17) anliegenden Bereich mit in Richtung auf die Führungsausnehmungen (13,14) vorspringenden Fortsätzen (15,16).

6. Sitzelement nach Anspruch 5,
   dadurch gekennzeichnet
   daß die mechanischen Verbindungsmittel die Seitenteile (8,9) der Sitzfläche (1) im Bereich der Fortsätze (15,16) durchsetzen.

7. Sitzelement nach einem oder mehreren der vorhergehenden Ansprüche,

dadurch gekennzeichnet
- daß die Rückenlehne (17) und die mit ihr verbundenen Seitenteile (18,19) aus einem Kunststoff einstückig geformt sind und / oder
- daß das Sitzelement (1) und die mit ihm verbundenen Seitenteile (8,9) aus einem Kunststoff einstückig geformt sind.

8. Sitzelement nach Anspruch 7,
       dadurch gekennzeichnet,
   daß die aus Kunststoff bestehenden Steckzapfen (21,22) einstückig an die Rückenlehne (17) angeformt sind.

9. Sitzelement nach einem oder mehreren der vorhergehenden Ansprüche,
       gekennzeichnet durch
   eine an der Rückenlehne (17) angebrachte Kopfstütze (25) mit entsprechend der Form der Rückenlehne (17) angesetzten Seitenteilen (26,27) zur etwa entsprechend den Ohren eines Ohrensessels wirksamen Kopfanlage für das Kind.

10. Sitzelement nach Anspruch 9,
        gekennzeichnet durch
    eine höhenverstellbare Anordnung der Kopfstütze (5) an der Rückenlehne (17).

FIG.1

## FIG. 2

FIG.3